# EUROPEAN PATENT SPECIFICATION

(11) **EP 3 284 581 B1**
(45) Date of publication and mention of the grant of the patent: **15.01.2020**
(21) Application number: 15386014.3
(22) Date of filing: 29.05.2015
(51) Int. Cl.: B29C 59/14

(54) **METHOD TO FABRICATE CHEMICALLY-STABLE PLASMA-ETCHED SUBSTRATES FOR DIRECT COVALENT BIOMOLECULE IMMOBILIZATION**
VERFAHREN ZUR HERSTELLUNG VON CHEMISCH STABILEN, PLASMAGEÄTZTEN SUBSTRATEN ZUR DIREKTEN, KOVALENTEN BIOMOLEKÜLIMMOBILISIERUNG
PROCÉDÉ POUR FABRIQUER DES SUBSTRATS GRAVÉS PAR PLASMA CHIMIQUEMENT STABLE POUR IMMOBILISER DES BIOMOLÉCULES COVALENTES DIRECTES

(30) Priority: 03.06.2014 GR 20140100319
(43) Date of publication of application: 21.02.2018
(73) Proprietor: NATIONAL CENTER FOR SCIENTIFIC RESEARCH "DEMOKRITOS", 15310 Aghia Paraskevi Attikis (GR); Gogolides, Evangelos, 15310 Aghia Paraskevi Attikis (GR); Tserepi, Angeliki, 15310 Aghia Paraskevi Attikis (GR); Kakabakos, Sotirios, 15310 Aghia Paraskevi Attikis (GR); Petrou, Panagiota, 15310 Aghia Paraskevi Attikis (GR)
(72) Inventor: Gogolides, Evangelos, 15310 Aghia Paraskevi Attikis (GR); Tserepi, Angeliki, 15310 Aghia Paraskevi Attikis (GR); Kakabakos, Sotirios, 15310 Aghia Paraskevi Attikis (GR); Petrou, Panagiota, 15310 Aghia Paraskevi Attikis (GR); Tsougeni, Katerina, 15310 Aghia Paraskevi Attikis (GR)

(56) References cited:
- EP-A2- 0 781 653
- TSOUGENI K ET AL: "Nano-texturing of poly(methyl methacrylate) polymer using plasma processes and applications in wetting control and protein adsorption", MICROELECTRONIC ENGINEERING, ELSEVIER PUBLISHERS BV., AMSTERDAM, NL, vol. 86, no. 4-6, 1 April 2009 (2009-04-01), pages 1424-1427, XP026106444, ISSN: 0167-9317, DOI: 10.1016/J.MEE.2008.11.082 [retrieved on 2008-12-09]
- TSOUGENI K ET AL: "Mechanisms of oxygen plasma nanotexturing of organic polymer surfaces: From stable super hydrophilic to super hydrophobic surfaces", LANGMUIR, AMERICAN CHEMICAL SOCIETY, NEW YORK, NY; US, vol. 25, no. 19, 6 October 2009 (2009-10-06), pages 11748-11759, XP002683835, ISSN: 0743-7463, DOI: DOI:10.1021/LA901072Z [retrieved on 2009-09-08]

## Description

### Field of the Invention

The present invention relates to the production of plasma etched organic polymer or SiO₂ surfaces. These surfaces may be advantageously used as substrates for the immobilization of biomolecules.

### State of the art and background of the invention

Immobilization of biomolecules allows exploiting their characteristics under controlled environments, and enables a large variety of applications, including microarrays, cell arrays, and microfluidics for diagnostic purposes, biocompatible surfaces for medical applications such as implants, and many more. New substrate materials that can be easily fabricated and functionalized with a number of reactive groups to specifically immobilize biomolecules are becoming very attractive. A biomolecule is said to be "immobilized" to a solid support, if it is either physically adsorbed to the support due to van-der-Waals dispersion forces, hydrogen bonding or acid-base interactions, or covalently attached to activated surface groups, with sufficient strength that it cannot be removed from the support by washing with detergents. Covalent immobilization may result in better biomolecule activity, reduced nonspecific adsorption, and greater stability.

Biomolecule adsorption onto a substrate is highly affected by distinct surface properties such as topography, roughness, electrical charge, stiffness, functional groups, and wettability (A.V. Singh, et al.,J Biomed Mater Res Part A,2013,101A,3019-3032). The wettability and topography have been documented as critical factors that can affect biomolecule immobilization (Ino, et al.,Journal of Bioscience and Bioengineering,2007,104,420-423). One of the methods used to control immobilization is based on the extreme contrast of wettability, ranging from hydrophilic to superhydrophobic. The method that our invention addresses is based on surface hydrophilic functionalization and surface topography.

Biomolecules are immobilized on SiO₂ surfaces after their modification with organosilanes such as 3-aminopropyltriethoxysilane (APTES) or 3-glycidoxypropyltrimethoxysilane (GOPS), in order to introduce functional groups such as amine- or epoxy. Depending on the molecule to be bound further functionalization may be required for modification of the groups present on the support to more active moieties, such as aldehydes (MacBeath, et al., Science,2000,289,1760-1763), succinimidyl esters or isothiocyanate groups (Benters, et al.,Chembiochem,2001,2,686-694) able to react with nucleophilic groups (amino, thiol, hydroxyl) on the ligand molecules.

Organic polymer surfaces on the other hand, are chemically inert and thus less suitable for the immobilization of biomolecules. Common organic polymer treatment techniques used for modification of their surface are often based on standard wet chemistry, e.g. applying strong oxidizing agents, UV irradiation/ozone, corona discharge and plasma (McCarley, et al.,Journal of the American Chemical Society,2004,127,842-843, S. Wei, et al.,The Journal of Physical Chemistry B,2005,109,16988-16996, C. Situma, et al.,Analytical Biochemistry,2005,340,123-135).

Plasma treatment of organic polymer or SiO₂ surfaces became a well-established technique for many applications, because of its unique ability to modify the surfaces without affecting their bulk properties (R. d' Agostino, et al.,Plasma Process. Polym.,2005,2,7, Holmberg, et al.,2002, Handbook of Applied Surface and Colloid Chemistry, John Wiley & Sons Ltd). The widespread applications of plasma processing relies on its competitive advantages, namely the dry character, the low temperature processing and mainly the flexibility to change the process outcome from deposition, to etching, nanotexturing, and chemical modification, by tuning the gas phase chemistry and the ion-bombardment energy.

Plasma processing is widely used as a preparation step of organic polymer substrates prior to biomolecule immobilization (T. Desmet, et al.,Biomacromolecules,2009,10,2351) and is very effective in organic polymer surface functionalization due to the high throughput and the target-oriented chemistry (C. Bergemann, et al.,Plasma Processes and Polymers,2012,9,261-272). In the last few years, several studies dealing with the possibility of tuning and controlling the cell and protein adhesion of surfaces by means of plasma treatments have been published (B. D. Ratner, et al.,Annu. Rev. Biomed. Eng.,2004,6,41, F. Brétagnol, et al.,Plasma Processes and Polymers,2006,3,443-455, Ch. Baquey, et al.,Nucl. Instrum. Methods B,1999,151,255A. Ohl, et al.,J. Mater. Sci., Mater. Med.,1999,10,747-754). Below we review the various plasma-based surface modification strategies that have been used to attach biomolecules to different solid supports.

Many groups used plasma activation as the first step to create functional groups such as NHₓ with NH₃ based plasmas, or SOₓ with SO₂ plasmas, or C=O and - COOH and OH with O₂ based plasmas. Subsequently, a linker attachment and the biomolecule attachment to the linkers followed (A. Jesus Martinez-Gómez, et al.,Cellulose,2009,16,501-517, A. A. Meyer-Plath, et al.,Vacuum,2003,71,391-406). Plasma deposition of polymers appropriate for biomolecule binding or non-binding has also been used (F. Bretagnol, et al.,Plasma Processes and Polymers,2006,3,30-38, P. Colpo, et al.,Adv Biochem Engin/Biotechnol,2009,109-130, P. Rossini, et al.,Materials Science and Engineering B,2003,23, F. Rossi, et al.,Journal of Physics: Conference Series,2010,252,012001). For example plasma polymerization of acrylic acid by RF plasma-assisted chemical vapor deposition has been proposed by P. Rossini et al. (2003), for providing functionalized surfaces with carboxyl groups. In addition F. Bretagnol et al. (2006) fabricated micropatterned surfaces by a combination of photolithography and plasma polymerization process for selective protein adsorption and cell alignment.

Direct biomolecule or cell binding has also been attempted for NHx functionalized surfaces, or for O₂ plasma treated surfaces, the latter usually after activation with coupling agents e.g. by carbodiimides (V. Gubala, et al.,Colloids and Surfaces B: Biointerfaces,2010,81,544-548, K. Schroder, et al.,Contrib. Plasma Phys.,2001,41,562-572, D. Okrongly, et al.,Patent,1990, US4933410 Patent: Covalent attachment of macromolecules on substrate surfaces , C. Sarra-Bournet, et al.,Journal of Physics D: Applied Physics,2006,39,3461-3469). Gubala et al. (V. Gubala, et al.,Analytica Chimica Acta,2013,760,75-82) investigated the binding capacity of functionalized COP substrates with carboxyl groups, by plasma oxidation and plasma enhanced chemical vapor deposition, in reactions with amino-modified oligonucleotides. They reported that plasma oxidized surfaces had stability problems and gave low intensity. Hence they proposed plasma polymerized coatings of acrylates for specific immobilization of biomolecules through carboxyl or carbonyl interactions with high binding capacity. They concluded that the reactive species on plasma treated surfaces are prone to degradation in air, and advise to use the surfaces for biomolecule immobilization immediately after plasma. Bilek et al. (M. M. M. Bilek, et al.,PNAS,2011, doi: 10.1073/pnas. 1103277108, M. M. M. Bilek, et al.,Patent, 2009, Biological functionalization of substrates,) proposed an energetic ion-assisted plasma process (plasma immersion ion implantation PIII) that can produce surfaces with free radicals and covalently immobilize functional biological molecules. This method is one of the few that produce direct, covalent binding of biomolecules, and which is stable in time. However, it applies very high voltages (several kV) which may damage a polymer, mostly employs deposited films, rather than the initial organic polymer film itself, and needs specialized apparatus, rather than typical plasma etching equipment. In addition the density of biomolecule immobilization is the same as in a typical flat surface, and thus no gain in sensitivity is obtained if a diagnostic application is targeted.

Therefore, despite the huge progress briefly outlined above, there seems to be no method to give covalent, direct, high density and stable binding of plasma treated organic polymer or SiO₂ surfaces to biomolecules without the use of linker groups.

Our group recently presented a method based on a one-step Fluorocarbon (FC) plasma treatment of patterned Si/SiO₂ or Si/Si₃N₄ substrates that resulted to highly selective protein adsorption on SiO₂ or Si₃N₄ areas (P. Bayiati, et al.,Biosensors and Bioelectronics,2009,24,2979-2984). Chemical characterization of the surfaces was performed combining XPS analysis and reaction with biomolecules that form covalent bonds with carboxyl or carbonyl groups, suggesting the covalent nature of protein binding selectively on plasma treated SiO₂ which contains carboxyl and carbonyl groups after plasma etching (A. Malainou, et al.,The Journal of Physical Chemistry A,2013,117,13743-13751). In these publications we proposed that the fluorocarbon plasma deposits a thin fluorine-containing organic polymer (which resembles Teflon® although it is less fluorinated) on the surface of SiO₂ with several dangling bonds, which are oxidized by the Oxygen atoms of SiO₂ or from the air molecules or from Oxygen atoms in the plasma to produce surface carboxyl or carbonyl groups. Etching of SiO₂ proceeds through this thin plasma deposited polymeric layer.

Little work has been done concerning the role of micro and nano topography on biomolecule attachment on surfaces (Rucker, et al.,Langmuir,2005,21,7621-7625, S. H. Yeo, et al.,J. Korean Phys. Soc.,2006,48,1325).

Our group is one of the few groups which study the effect of simultaneous nanotopography and chemical modification on biomolecule binding. In our previous, works, we have observed the formation of controlled surface roughness (texture) on polymers as a result of plasma processing. We used the term "nanotexture" to describe the plasma-induced roughness comprising high-aspect-ratio micro-nano structures [(*Greek patent Application number:* 20050100473*,* PCT publication number: WO2007031799*) and (Greek patent Application number:* 20080100404*,* PCT publication number: WO2009150479)]*.* Our group has extensively studied the effect of both oxygen, fluorine and fluorocarbon containing plasmas on the wetting characteristics of PDMS, PMMA, PEEK, PS and other polymers and has fabricated both super hydrophilic and super hydrophobic surfaces (A. Tserepi, et al.,Nanotechnology,2006, 17,3977, K. Tsougeni, et al.;Plasma Processes and Polymers,2007,4,398-405, K. Tsougeni, et al.,Japanese Journal of Applied Physics,2007,46,744-750, K. Tsougeni et al.,Langmuir,2010,26,13883-13891, K. Tsougeni et al.,Langmuir,2009,25,11748-11759, N. Vourdas, et al.,Nanotechnology,2007,18,125304, N. Vourdas, et al.,Int. J. Nanotechnology,2009,6,1/2). In addition, we have demonstrated the ability of plasma nanotextured organic polymer surfaces, and especially of PMMA and poly(dimethylsiloxane) (PDMS) surfaces, to immobilize significantly higher amounts of proteins, compared with flat (untreated) surfaces paving the way for highly sensitive microarrays (K. Tsougeni et al.,Langmuir,2010,26,13883-13891, K. Tsougeni, et al.,Microelectronic Engineering,2009,86,1424-1427). This important effect was due mainly to the increased surface area of the nanotextured substrates. We also applied plasma nanotexturing on commercially available polystyrene (PS) and PDMS-coated glass slides to create protein or DNA microarray substrates with increased binding capacity and signal intensity and 100x higher sensitivity compared to flat substrates (K. Tsougeni, et al.,Analytical and Bioanalytical Chemistry,2012,403 ,2757-2764).

We note that very few technologies, if any, combine surface functionalization and topography creation with possibility of high surface area for increased, high-density, direct, covalent binding. However the problems still remaining are:
1) The first problem is hydrophobic recovery. Super-hydrophilic surfaces after plasma functionalization are not stable, and suffer from a phenomenon known as hydrophobic recovery; i.e a gradual increase of the contact angle (CA) with time (ageing). In our previous work, we retarded ageing of super hydrophilic surfaces for approximately 30 days, due to the beneficial effect of the nanotextured topography (K. Tsougeni et al.,Langmuir,2009,25,11748-11759). Similarly, SiO₂ surfaces are unstable immediately after plasma and are prone to ageing. Moreover, particularly for nanotextured organic polymer surfaces it has been reported that aging results in an increase of CA above the untreated polymer value thus leading to superhydrophobicity (Y.P. Li et al.,Surface and Coatings Technology,2012,213,139-144).
   Many groups have examined the effect of different storage conditions (Zilio, et al.,Biomedical Microdevices,2014,16,107-114, Roy, et al.,Sensors and Actuators B: Chemical,2010,150,537-549, D. Jucius, et al, Applied Surface Science,2012,263,722-729), storage temperature (J. Larrieu et al.,Surface and Coatings Technology,2005,200,2310-2316, W. J. Brennan, et al.,Polymer,1991,32,1527-1530, Y.P. Li et al.,Surface and Coatings Technology,2012,213,139-144, J. Nakamatsu, et al.,Journal of adhesion science and technology,1999,13,753-761), temperature during plasma treatment (B. K. Kim, et al.,Journal of adhesion science and technology,2001,15,1805-1816), immersion in solutions (Ch C. Dupont-Gillain, et al.,Langmuir,2000,16,8194-8200), and crystallinity on hydrophobic recovery of plasma treated surfaces. For example J. Larrieu *et al.* (J. Larrieu et al.,Surface and Coatings Technology,2005,200,2310-2316), studied the surface stability of oxygen plasma-treated atactic and isotactic polystyrene (PS) polymers a-PS and i-PS with increasing the storage temperature at atmospheric pressure and concluded that the crystallinity of the polymer plays role in polymer chain diffusion. Also, Mora et al. (M. Morra, et al.,Journal of Colloid and Interface Science, 1989,132,504-508, M. Morra, et al.,Die Angewandte Makromolekulare Chemie,1991,189,125-136) examined the hydrophobic recovery of a variety of oxygen plasma treated organic polymer surfaces such as polypropylene, polystyrene and polycarbonate. Surface restructuring, in the case of oxygen plasma treated polypropylene, was prevented at liquid nitrogen environment and was enhanced by increasing the temperature above room temperature. So far all works which reported that some baking steps can accelerate ageing employed flat surfaces without roughness, and have not examined if these thermally-treated flat surfaces remain chemically active in terms of biomolecule immobilization.
2) The second problem related to the stability of biomolecule immobilization via physical adsorption. Physical adsorption from most substrates leads to washing away of biomolecules with various washing steps, and results in complete removal with washing steps containing detergents. Thus, to keep the biomolecules in place only covalent binding is used, which requires surface wet functionalization and linker attachment.

The present invention provides a method to create stable (i.e. non-ageing) functionality in time and where desirable high surface area-nanotopography on which biomolecules can be covalently bound directly (without linkers introduced by extra chemical processing) with a high density.

### Summary of the invention

The present invention provides direct, covalent immobilization of biomolecules on optimized organic polymer or SiO₂ surfaces with plasma-induced, random high surface-area topography, desirable chemical functionality (and wetting behavior), which is stable over time. An annealing step was discovered and introduced in the present invention, which rapidly ages and stabilizes the plasma treated surfaces without destroying the desired -COOH functionality. Direct (without linkers), covalent immobilization on plasma nanotextured organic polymer surfaces is demonstrated, since after harsh washing with sodium dodecyl sulphate (SDS) even at elevated temperatures the protein remained only on the plasma treated surface.

### Brief description of the drawings

Figure 1 shows the following: a schematic of (a) a flat and (b) plasma nanotextured rough surface as well as SEM images of treated PMMA surfaces after (c) 30 s (a practically flat surface), and (d) 5 min O₂ plasma etching showing the nanotexture formation, and (e) after 5 min O₂ plasma etching and immersion of surface in 5% SDS and drying, showing nanotexture bundling upon drying of sample. These surfaces are etched in a high density helicon-type (ICP) plasma reactor with alumina dome.
Figure 2 shows SEM images of treated nanotextured PMMA after O₂ plasma etching in a plasma reactor (Reactive Ion Etcher-RIE) with a quartz electrode, after (a) 1 min, and (b) 10 min O₂ plasma etching.
Figure 3 shows hydrophobic recovery (ageing) of PMMA surfaces with and without thermal annealing after nanotexturing in O₂ plasmas in a helicon reactor for 5 min. Room temperature ageing (▲). Ageing after thermal annealing at 110 °C for 30 min (□).
Figure 4 shows SEM images of treated nanotextured COP surfaces after O₂ plasma etching for (a) 30 s, (b) 2 min, (c) 5 min and (d) 10 min in a high density helicon-type (ICP) plasma reactor with alumina dome.
Figure 5 shows SEM images of treated nanotextured COP surfaces for 4 min O₂ plasma etching in a plasma reactor (RIE) with a quartz electrode.
Figure 6 shows the hydrophobic recovery (ageing) of COP surfaces with and without thermal annealing after nanotexturing in O₂ plasmas in a helicon reactor for 10 min. Room temperature ageing (▲). Ageing after annealing at 130 °C for 30 min (o)..
Figure 7 (a-d) shows processes of covalent attachment and detection of biotin derivatives on plasma etched organic polymer and SiO₂ surfaces.
Figure 8 shows fluorescence intensities of biotin derivatives covalently attached on PMMA (i) untreated, (ii) 5 min plasma treated in ICP reactor, (iii) 5 min plasma treated in ICP reactor and thermally annealed. Fresh and 30 days aged surfaces have been used to attach biotin derivatives in order to demonstrate the beneficial effect of thermal annealing. The figure also reveals the stability of attached biotin derivatives following the aggressive washing protocol with SDS (hatched columns).
Figure 9 shows fluorescence intensities of biotin derivatives covalently attached on areas of untreated, 1 min, and 10 min plasma treated nanotextured PMMA surfaces in a RIE plasma reactor after thermal annealing. The figure reveals the beneficial role of plasma treatment time and the stability of attached derivatives following the aggressive washing protocol with SDS (hatched columns).
Figure 10 shows ESR signal from PMMA and COP oxygen plasma treated nanotextured surfaces (a) in helicon (ICP), and (b) in RIE reactor.
Figure 11 (a, b) shows fluorescence intensities obtained from areas of covalently bonded biotin derivatives onto COP surfaces plasma nanotextured in (a) a helicon (ICP) or (b) a RIE reactor.. The figure reveals the beneficial role of plasma treatment time and the stability of attached derivatives following the aggressive washing protocol with SDS (hatched columns).
Figure 12 shows fluorescence intensities obtained from areas of covalently bonded biotin derivatives onto (a) untreated SiO₂ surfaces, (b) 15-s C₄F₈ plasma treated SiO₂ surfaces and (c) thermally annealed after a 15-s C₄F₈ plasma treatment SiO₂ surfaces.
The beneficial role of thermal annealing and the stability against aggressive washing with SDS is seen (hatched columns).
Figure 13 shows the process of immobilization and detection of protein on organic polymer surfaces.
Figure 14 shows fluorescence intensity values obtained for PMMA surfaces coated with RgG for 24 h incubation, after reaction with AF546-labeled anti rabbit IgG antibody as a function of days after plasma treatment in helicon (ICP) reactor and annealing at 110 °C for 30 min both prior to and after washing with SDS solution.
Figure 15 shows fluorescence intensity values obtained for PMMA surfaces coated with RgG for 24 h incubation, after reaction with AF546-labeled anti rabbit IgG antibody as a function of days after plasma treatment in RIE reactor and annealing at 110 °C for 30 min both prior to and after washing with SDS solution..
Figure 16 shows fluorescence intensity values obtained for COP surfaces coated with RgG for 24 h incubation, after reaction with AF546-labeled anti rabbit IgG antibody as a function of plasma treatment time in (a) helicon (ICP) and (b) RIE reactor both prior to and after washing with SDS solution.
Figure 17 shows the process of CRP sandwich assay.
Figure 18 shows a) the CRP calibration curves obtained from spots created on untreated PMMA surfaces, O₂ plasma treated and O₂ plasma treated and thermally annealed surfaces. b) Fluorescence images of spots corresponding to the 100 ng/mL CRP calibrator on (i) untreated, (ii) O₂ plasma nanotextured PMMA surfaces thermally annealed and (iii) O₂ plasma nanotextured PMMA surfaces without annealing.
Figure 19 shows fluorescence images from a patterned, plasma treated, and thermally annealed surface on which anti-LPS polyclonal antibody has been immobilized. The surface is shown after reaction with a 500 ng/mL LPS solution. Fluorescence is detected after reaction with streptavidin-alkaline phosphatase conjugate and finally incubation with EFL 97 precipitate substrate.
Figure 20 illustrates SEM images showing capture of salmonella cells on plasma treated and thermally annealed surfaces with immobilized anti-LPS polyclonal antibody after flowing a solution of salmonella cells with density 10⁸ cells/ml.

### Detailed description of the invention

The present invention provides plasma etched organic polymer or SiO₂ surfaces with desirable chemical functionality (and wetting behavior), which is stable over time for the direct, i.e. without linkers introduced by extra chemical processing, covalent immobilization of biomolecules.

A breakthrough result of the present invention is the discovery of a thermal annealing step, which rapidly ages and stabilizes the plasma treated surfaces (both organic polymer and SiO₂) while retaining or even enhancing their desired chemical functionality. Indeed, these plasma etched surfaces, can be rapidly aged and stabilized after an additional annealing step, by heating below the organic polymer glass transition temperature T_{g}, preferably between 5 and 40 degrees below T_{g}, and more preferably 10 degrees below the T_{g}, and possess stable (non-ageing) wetting properties for months. For the case of SiO₂ as discussed in (P. Bayiati, et al.,Biosensors and Bioelectronics,2009,24,2979-2984) and (A. Malainou, et al.,The Journal of Physical Chemistry A,2013,117,13743-13751) a fluorine-containing organic polymer is deposited, which resembles Teflon® although less fluorinated, and thus baking below the T_{g} of Teflon® is performed. In fact we measured the Tg of the plasma deposited polymer and found it to be Tg=116 °C, a value very close to the Tg of commercial Teflon® (G. Calleja et al., European Polymer Journal, 2013,49(8),2214-2222). The rapidly aged etched hydrophilic surfaces were found to be stable for covalent immobilization at least 4 months after plasma treatment. The untreated surfaces showed no covalent bonding. The stabilization of hydrophilicity and chemical functionality was totally unexpected, given what has been reported by us and others before, namely that ageing results in an increase of contact angle above the untreated polymer value often leading to superhydrophobicity for rough surfaces (K. Tsougeni et al.,Langmuir,2009,25,11748-11759, Y.P. Li et al.,Surface and Coatings Technology,2012,213,139-144).

Typically the organic polymer surfaces are nanotextured by treatment with plasma. Surfaces of such morphology may be produced by various methods, such as gaseous plasma treatment (etching or deposition), electrochemical etching or deposition, laser ablation, nanoparticle deposition, and many others. In the present invention such surfaces are preferably produced by treatment with gaseous plasma.

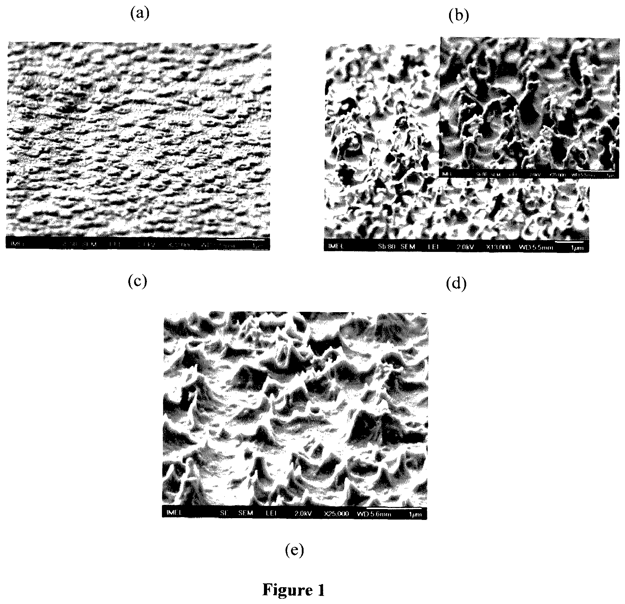

Here the term nanotexture is used to describe a rough surface, comprising randomly or quasi-orderly positioned structures of micrometer or several hundred-nanometer size or even smaller sub-hundred nanometer single-scale or composite multiscale structures. A schematic is shown in Fig. 1 (a, b). The important feature of these surfaces is their increased surface area compared to flat surfaces by at least a factor of 3 and preferably larger by a factor of 10.

According to the present invention the term "organic polymer surface" means a surface made of an organic polymer, as well as a surface made of other materials, such as glass, metal, different organic polymer or other substrate, which is coated with an organic polymer film.

Preferably, the organic polymer of the surfaces of the present invention belongs to the group of acrylic copolymers, or olefin, or phenolic polymers, silicones or organosilicon polymers-organic copolymers. More preferably, the organic polymer is selected from the group consisting of poly(methyl methacrylate) (PMMA), poly(ether ether ketone) (PEEK), poly(ethylene terephthalate) (PET), cyclo olefin polymer (COP), cyclo olefin copolymer (COC), polystyrene (PS), crosslinked polydimethylsiloxane (PDMS), and PDMS-acrylate copolymers. Even more preferably, the organic polymers are poly(methyl methacrylate) (PMMA), or polystyrene (PS), or cyclo olefin polymer (COP).

The organic polymer is preferably used in the form of plates, or foils, or films spin-coated on flat or curved surfaces such as silicon wafers, metal, or glass slides or other curved objects.

The SiO₂ surface is a silicon dioxide film fabricated by various methods, such as growth on silicon, or deposition on any substrate. It may also be quartz, or special glass, or other clean form of SiO₂. Contrary to organic polymers referred to above, SiO₂ is smoother and less nanotextured (by a factor between 1 to 2), but is chemically modified after the plasma treatment.

The surfaces of the present invention are etched and simultaneously nanotextured (if desired) in oxygen or fluorine or fluorocarbon containing plasmas or their mixtures. Preferably organic polymers are etched in oxygen or oxygen rich mixtures, while SiO₂ is etched in fluorocarbon gases or fluorocarbon rich mixtures, which deposit thin polymers on the SiO₂ surface. Under conditions of varying ion energy, processing time, and temperature, various nanotexture geometries may be produced resulting in different increase of the surface area compared to a flat surface. The etching and nanotexturing (if applied) of the organic polymer or SiO₂ surfaces may be carried out using a high density helicon or inductively coupled plasma reactor, or a reactive ion etcher, or other plasma etchers.

The etching has to be carried out in the presence of etching inhibitors. As disclosed in our previous inventions (*Greek patent Application number:* 20050100473*,* PCT publication number: WO2007031799) and (*Greek patent Application number:* 20080100404*,* PCT publication number: WO2009150479) the formation of nanotexture is caused by polymer etching with simultaneous deposition of unetchable inhibitors from the plasma reactor walls, or electrodes, or polymer etching which contains pre-existing such inhibitors in the polymer or on the organic polymer surface. In inductively coupled plasma reactors (ICP) and-or helicon wave reactors if the electrostatic fields are not shielded in the antenna, co-sputtering of dielectric material during etching creates etching inhibitors resulting in nanotexture formation (E. Gogolides, et al., Journal of Physics D: Applied Physics,2011,44,174021). In reactive ion etcher (RIE) machines sputtering of electrode material creates etching inhibitors. Changing plasma parameters -for a given plasma reactor- changes the nanotexture geometrical characteristics.

For the present invention, etching must be conducted under anisotropic etching conditions with typical operating pressures from 0.4-7 Pa and preferably 0.5-2Pa, typical plasma power ranges from 100 - 3000 W and preferably 1500-3000W, and typical bias voltage ranges from -50 - -300 V. For lower density reactive ion etchers the conditions of pressure ranges from 5 - 100 mT, and of plasma power ranges from 100 - 1000 W.

According to the present invention the nanotexture should be enough to increase the surface area available for biomolecule binding, in comparison to the untreated surface, by a factor 1-10. For the present invention the nanotexture and the surface area of the organic polymer or SiO₂ surfaces may be controlled by varying the ion energy (i.e. the negative bias voltage applied to the sample and generated by a power generator), and for a specific energy by varying the duration of etching.

According to the present invention, when an unshielded inductively coupled plasma etcher is used, the desired high-surface-area nanotexture may be obtained with at least 3min of etching, when the absolute value of the negative bias voltage is preferably higher than 100V. The duration of etching is preferably larger than 3min, and more preferably larger than 5min.

According to the present invention plasma treatment may be effected on the whole surface, or on selected areas, the remaining surface being protected by a mask. This way a pattern of plasma treated areas is created on the surface, which is can be subsequently used to create a pattern of biomolecules or cells.

According to the present invention, after plasma treatment and before biomolecule immobilization the organic polymer or SiO₂ surfaces should be annealed at a temperature below the organic polymer glass transition temperature Tg, or the plasma deposited polymer T_{g}, preferably between 5 and 40 degrees below T_{g}, and more preferably 10 degrees below the T_{g} for 10-120 min, in order to effect accelerated ageing of the chemical functionality, which becomes stable for months, with contact angles ranging from 40-90°, retaining or enhancing the desired chemical functionality. The present invention further provides the use of organic polymer or SiO₂ surfaces for covalent biomolecule immobilization directly without linkers. According to the present invention a linker is any molecule interposed between the biomolecule and the surface and chemically linked to both of them, introduced by extra chemical processing. Biomolecules include but are not limited to proteins, antibodies, and antigens.

In the present invention the biomolecule solution contacts with the surface for 1-24 hours and preferably 24 h and washing with buffer solution follows. Contacting with the biomolecule solution can take place over the whole surface or only on spots, if a spotter is used to dispense the solution.

The immobilization of biomolecules onto the surfaces may be quantitatively determined through reaction with fluorescently labeled counterpart molecules. It is found that dense binding increased by a factor of 1-10, and preferably 5-10 compared with a flat surface is obtained.

It has now been found that surfaces treated as described above facilitate covalent, non-washable with detergents binding of biomolecules.

Therefore binding of biomolecules on surfaces is stable even after harsh washing with detergents such as sodium dodecyl sulphate (SDS) at elevated temperatures even up to 90 °C.

The present invention achieves 40 - 90% biomolecule retention. Conversely, in the case of untreated surfaces, washing with SDS removes all of the adsorbed biomolecules.

Furthermore, it has been found that surfaces treated as described above facilitate stable covalent biomolecule binding.

Freshly plasma-treated surfaces bind covalently due to the presence of functional groups and mainly due to C=O, and -COOH groups.

The present invention provides plasma nanotextured substrates that are expected to find widespread application in lab-on-a-chip devices (such as microfluidics or microarrays or cell arrays) for chemical and biological analysis, in diagnostic applications, and in medical devices such as stents, implants, and drug delivery devices.

The proposed methodology can be applied to enable considerably multi-analyte bioanalytical applications involving integrated silicon oxide waveguides as sensing elements.

The fabricated substrates can be applied in biosensors for enhanced detection sensitivity, as model substrates for protein-protein interaction studies, as well as substrates for cell cultivation and tissue engineering.

In addition, immobilization of cells through binding onto plasma etched substrates modified with antibodies against cell surface antigens is provided. Therefore, applications in cell arrays for high-throughput drug screening, where only small quantities of drug candidates are available, are foreseen. In addition, the cell arrays can be used to monitor single-cell gene expression and cellular responses, in cases where information from the culture average can mask the heterogeneity of the individual cell responses.

The advantages of the present invention include simplicity; rapidity and steadiness over time, compared to other functionalization protocols where the surfaces must be used rapidly after plasma, because they are prone to degradation in air, and where linker molecules have to be added to effect covalent binding of biomolecules.

### Examples

### Example 1: Fabrication of micro- and nano- textured PMMA organic polymer surface with stable chemical functionality after O₂ plasma etching and thermal annealing

Oxygen plasma etching was used to nanotexture PMMA surfaces, to create substrates with increased surface area for biomolecule immobilization. Under conditions of anisotropic etching in a high density plasma reactor (Alcatel MET tool) (O₂ pressure of 0.75 Pa, plasma power of 1900 W, and bias voltage of -100 V, etch rate 990 nm/min for PMMA), plasma treatment of PMMA surfaces results in the formation of columnar nanostructures. The plasma induced nanoroughness, and thus the surface area continues to grow with etching time. Fig. 1 (cd, d) illustrates tilted view SEM images of untreated and treated PMMA surfaces in O₂ plasma for 30 s, and 5 min respectively. The images reveal the formation of densely packed micro- and nano-columns 1-µm high, after 5 min O₂ plasma treatment. The 30 s treated surface shows minimal topography compared with the 5min treated surface, but is included in the surfaces under investigation to take into account only the chemical modification effect caused by the plasma on protein covalent bonding.

Column formation is the result of alumina sputtering from the reactor dome causing micromasking on the organic polymer surface. XPS analysis of these surfaces has shown that they are contaminated with Al species in the form of aluminium oxide or oxyfluoride. Amount and composition of this aluminium contamination varies with the history of the plasma reactor, but it is usually on the order of a few percent.

Fig. 1(e) shows a tilted view SEM image of a 5 min treated PMMA surface in O₂ plasma after immersion in SDS 5% solution in phosphate buffer for 10 min in 90°C. The structures bundle and collapse after immersion in the SDS solution, leading to shorter (0.47 µm) but more robust structures. The bundling occurs during drying of the solution as a result of capillary forces and the balance between adhesion and elastic forces of the high aspect ratio structures.

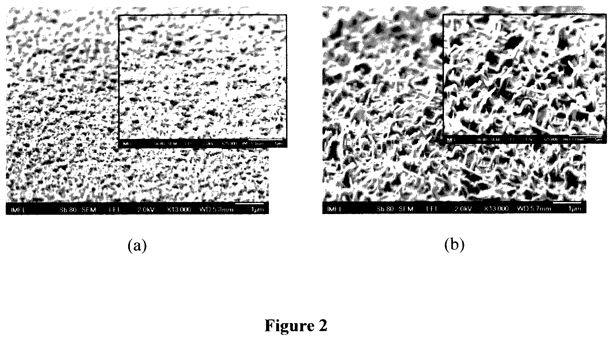

Similar results were obtained using also a low-density reactive ion etcher (RIE) with a quartz electrode, suggesting independence from the plasma reactor type. Fig. 2 presents tilted view SEM images of PMMA surfaces treated in a RIE plasma reactor (O₂ plasma, 10 mT, 400 W, 50 sccm, etch rate 430 nm/min) for (i) 1 min, (ii) 10 min respectively. The images reveal the formation of nano and micro-columns 0.3µm and 1.3 µm high after 1 min and 10 min, presumably due to quartz sputtering. However, in order to achieve the same column height and the same surface area increase with this reactor, longer reaction times were required due to much lower etching rate.

PMMA is a hydrophilic material, exhibiting a static contact angle of 65°. Plasma hydrophilized surfaces suffer from a phenomenon known as hydrophobic recovery; a gradual increase of CA with time (ageing). In our previous work, we retarded ageing of super hydrophilic PMMA surfaces for approximately one month, due to the effect of the nanotextured topography (K. Tsougeni et al.,Langmuir,2009,25,11748-11759). The present invention proposes a method that can create nanotextured surfaces with stable wetting behavior over time immediately after plasma, by means of an additional annealing step at 110 °C for 30 min.

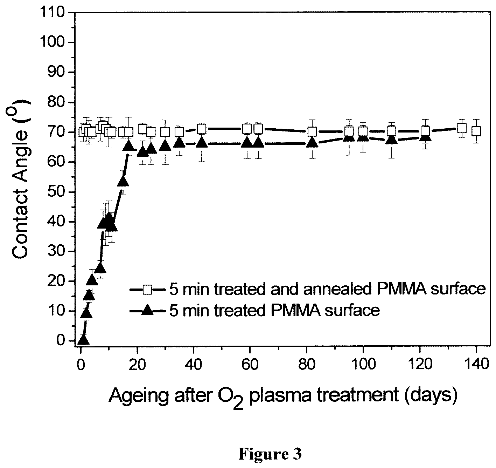

As shown in Fig. 3, it was found that the existence of nano-texture delayed the hydrophobic recovery of the PMMA surfaces. PMMA surfaces treated for 5 min in the helicon reactor and in O₂ exhibited super hydrophilicity for as long as 4 days, and slowly aged to the initial contact angle over a period of 17 days. On the contrary, the contact angle of the 5 min rapidly aged O₂ plasma treated PMMA surface returns to the initial level immediately after the annealing step and remains stable after a long period of time (>four months).

### Example 2: Fabrication of micro- and nano- textured COP organic polymer surface with stable chemical functionality after O₂ plasma etching and thermal annealing

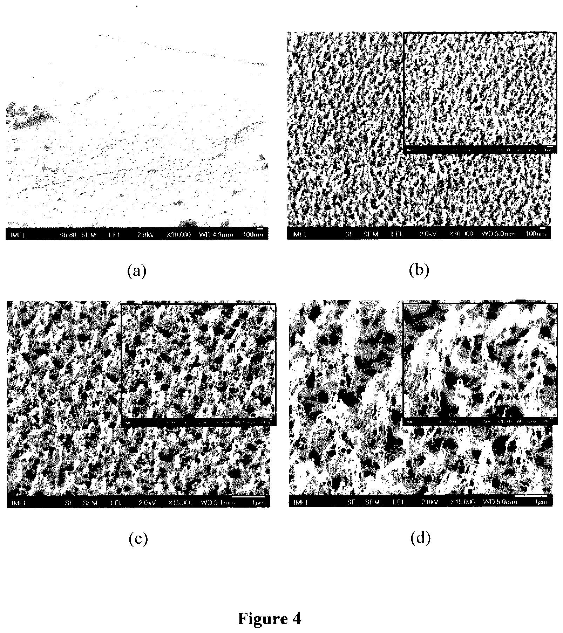

Fig. 4 illustrates tilted view SEM images of plasma treated COP surfaces in O₂ plasma for (a) 30 s, (b) 2 min, (c) 5 min, and (d) 10 min respectively. While the 30s treated surface remains almost flat, images reveal the formation of densely packed nano and micro-columns 0.13µm, 0.56µm and 1.7µm high, respectively.

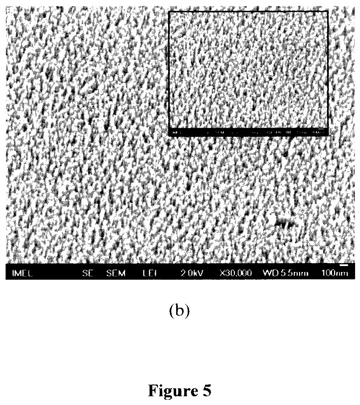

Similar results were obtained using the low-density reactive ion etcher (RIE). Fig. 5 presents tilted view SEM images of COP surfaces treated in a RIE plasma reactor (O₂ plasma, 10 mT, 400 W, 50 sccm, etch rate 210 nm/min for COP) for 4 min. The images reveal the formation of micro- and nano-columns 0.15 µm high after 4 min treatment. However, in order to achieve the same column height with this reactor as with the helicon one, longer reaction times were required due to much lower etching rate.

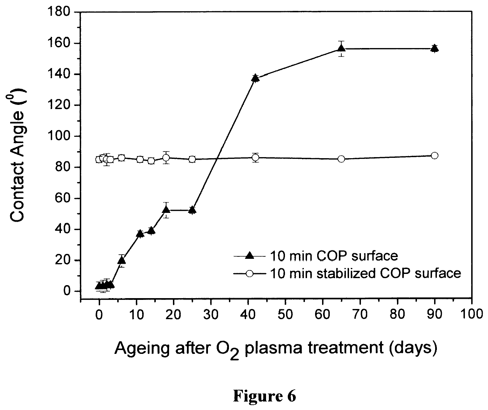

COP is a hydrophobic material exhibiting a static contact angle of 91°. Plasma nanotexturing retarded ageing of super hydrophilic COP surfaces for approximately one month, due to the effect of the nanotextured topography. The present invention proposes a method that can create nanotextured surfaces with stable wetting behavior over time immediately after plasma, by means of an additional annealing step at 130 °C for 30 min, as also shown in Fig. 6.

As shown in Fig. 6, it was found that the existence of micro and nanotexture delayed the hydrophobic recovery of COP surfaces. COP surfaces treated for 10 min in a helicon reactor in O₂ exhibited super hydrophilicity for as long as 3 days, and then aged over a period of almost 30 days. On the contrary, the contact angle of the 10 min rapidly aged O₂ plasma treated COP surface returns to initial level of hydrophobicity immediately after the annealing step and remains stable over a long period of time.

### Example 3: Nanotextured PMMA surfaces with stable chemical functionality capable of covalent binding of biomolecules

In order to determine the covalent immobilization capability of the plasma etched surfaces with stable chemical functionality, compared to untreated surfaces, we used specific biomolecules, namely biotin derivatives, that are designed to form covalent bonds with common functional groups such as carboxyl (-COOH) or carbonyl (C=O) groups: 1) water-soluble biotin compound containing polyethylene glycol (PEG) spacer arm and a terminal primary amine (Amine-PEG₃-Biotin), 2) mixture of amine-PEG₃-biotin with EDC (1-Ethyl-3-(3-dimethylaminopropyl) carbodiimide), 3) D-biotin and 4) two-step process: activation after reaction with sulfo-NHS (N-hydroxysulfosuccinimide)/EDC mixture followed by coupling of amine-PEG₃-biotin. In all cases reaction with fluorescently labeled streptavidin followed.

Oxygen plasma treatment forms C=O, -COOH, and C-OH functional groups onto PMMA surfaces, as revealed with XPS. We prove that the specific biomolecules mentioned above are covalently attached to the nanotextured surfaces through the formed functional groups after oxygen plasma. This is proven by observing the fluorescence after repeated washing with SDS at 90 °C, a harsh and aggressive detergent treatment protocol, designed to remove all non-covalently bound molecules. The persistence of fluorescence after such harsh washing steps was the indirect proof of covalent binding.

More specifically the -NH₂ group of the amine-PEG₃-biotin covalently links to a carbonyl group from the nanotextured substrate. Thus, direct binding of amine-PEG₃-biotin suggests covalent binding through carbonyl groups. EDC activates the carboxyl groups from the nanotextured substrate (forming an amine-reactive O-acylisourea unstable intermediate which allow carbodiimide coupling of amine-terminated biotin to the surface via an amide bond) to bind to the -NH₂ group of the amine-PEG₃-biotin. Thus, direct binding of amine-PEG₃-biotin in mixture with EDC signals also the presence of reactive carboxyl groups. Also, the sulfo-NHS/EDC mixture activates the carboxyl groups from the modified substrate forming an amine-reactive O-acylisourea intermediate. This intermediate reacts then readily with the - NH₂ group of the amine-PEG₃-biotin, yielding a stable amide bond. D-biotin was also reacted with the surfaces to exclude binding of the derivatives from sites other than their specific functional groups.

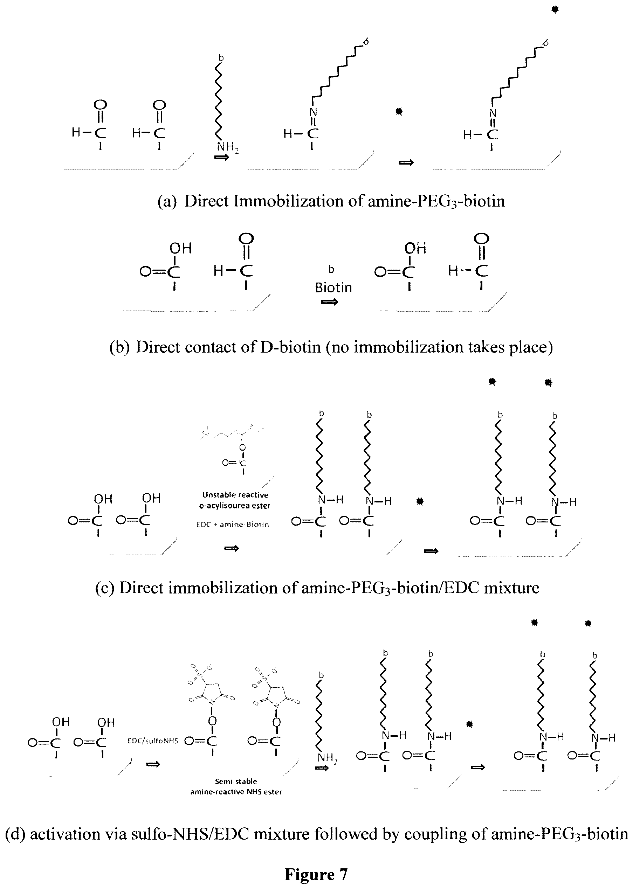

All processes followed for covalent binding of activated biotin derivatives onto the plasma-etched organic polymer and SiO₂ surfaces as well as their detection are schematically depicted in Fig. 7(a-d).

To identify the presence of carbonyl-groups onto the surfaces; the direct immobilization of (a) amine-PEG3-biotin, and (b) D-biotin was investigated. The two reagents were diluted at a concentration of 25 mM in 0.1 M NaHCO₃ solution, pH 8.5, and 80 µL droplets of each solution were deposited onto the surfaces. Incubation for 2 h at RT in a humidity chamber was implemented.

For the detection of carboxyl-groups onto the surfaces, two approaches were followed (a) direct immobilization of 25 mM amine-PEG3-biotin/5 mM EDC mixture in 0.1 M MES buffer at pH 5 and (b) a two step approach: 1) activation of carboxyl-groups by a EDC/NHS mixture (10 mM EDC and 5 mM sulfo-NHS in 0.1 M MES buffer, pH 5) for 1 h at RT. 2) Coupling of amine-PEG3-biotin from a 25 mM solution in 0.1 M NaHCO₃ solution, pH 8.5, for 2 h at RT.

Then all samples were washed with 0.1 M NaHCO₃ solution, pH 8.5, and immersed in a 10 g/L BSA (Bovine Serum Albumin) solution in 50 mM phosphate buffer, pH 7.4, (blocking solution), for 1 h at RT in order to cover the remaining free binding sites of the surface. After that the surfaces were washed three times with 50 mM phosphate buffer, pH 7.4. The immobilized biotin derivatives on the surface were detected through reaction with a 2.5 µg/mL AF546-labeled streptavidin in blocking solution, for 30 min at RT. Subsequently, the surfaces were washed extensively five times with 50 mM phosphate buffer, pH 7.4, and distilled water and dried under a stream of N₂. Fluorescence images were acquired with an Axioskop 2 Plus ® epifluorescence microscope (Carl Zeiss, Germany) equipped with a Sony Cyber-Shot® 8-bit digital camera and processed with ImagePro Plus® software (Media Cybernetics, Inc.).

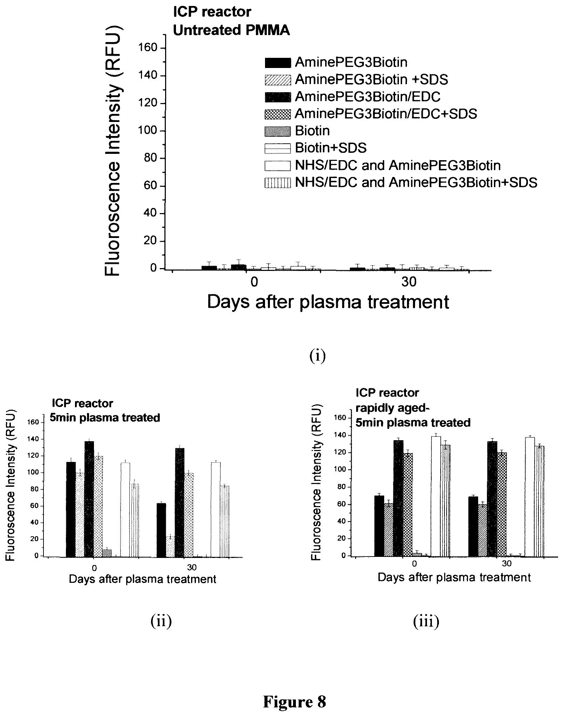

In Fig. 8(a), the fluorescence intensities obtained from areas modified with the respective biotin derivatives are provided before and after washing with the aggressive SDS protocol for (i) untreated and (ii) 5 min plasma treated PMMA surfaces in helicon reactor, (iii) rapidly aged (annealed) 5 min plasma treated PMMA surfaces in helicon reactor tested over a period of 30 days. As it is shown in Fig. 8, the untreated PMMA exhibits extremely low fluorescent absolute values; therefore shows no covalent bonding. On the other hand, the plasma nanotextured PMMA surfaces provided high fluorescence values, indicating reaction of carboxyl groups with NHS/EDC and/or amine biotin or of carbonyl groups with amine-PEG3-biotin. Freshly plasma treated PMMA binds covalently due to C=O and -COOH. Aged plasma treated PMMA binds due to -COOH, because the fluorescence intensity for amine-PEG3-biotin, which is covalently attached with the carbonyl groups, has a downward trend. In rapidly aged via thermal annealing plasma treated PMMA surfaces the fluorescence intensity is stable over a period of 30 days and binds covalently due to C=O and -COOH.

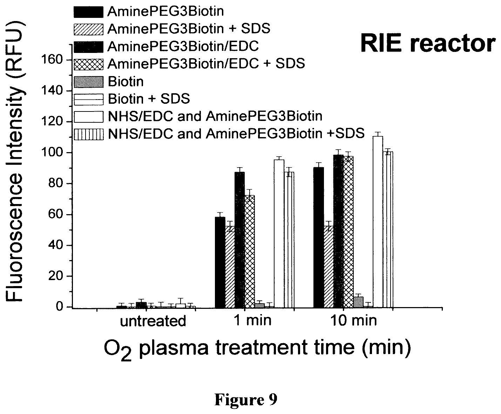

More specifically, the fluorescence values of rapidly aged via thermal annealing plasma nanotextured PMMA surfaces obtained by reacting the respective biotin derivative with surface carboxylic groups was 44-times higher than the value obtained by applying D-biotin onto a similar surface. Furthermore, the reaction of the surfaces with amine-PEG₃-biotin provided 23-times higher fluorescence compared with that of D-biotin. These results suggest that chemically stabilized plasma nanotextured PMMA surfaces lead to the formation of reactive and available carboxylic and carbonyl groups that can be used for covalent immobilization of biomolecules. One can further observe that the rapidly stabilized PMMA surfaces have a constant signal of intensity, and that this signal is almost not affected by harsh washing with detergent at 90 °C, suggesting covalent binding. Fig. 9 shows the fluorescence intensities on 1 min and 10 min plasma treated and rapidly aged PMMA surfaces in RIE reactor tested immediately after plasma before and after washing with the aggressive SDS protocol. Freshly plasma treated PMMA binds covalently due to C=O and -COOH. The untreated PMMA shows no covalent bonding.

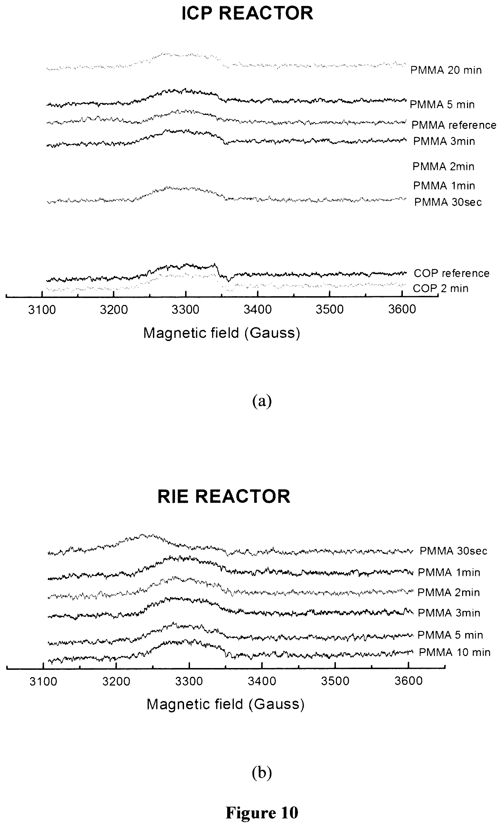

Furthermore, we explored the mechanism of covalent bonding of RgG protein on the nanotextured PMMA and COP surfaces. Bilek et.al immobilized proteins in hydrophilic surfaces by creating radicals in a reservoir below the surface using an energetic ion-assisted plasma process (plasma immersion ion implantation). The electron spin density of the free radicals can be quantified using electron spin resonance. For this reason, ESR measurements were obtained in order to examine if the nanotextured surfaces after plasma treatment possess free radicals which can form covalent bonds. Fig. 10 shows the ESR signal from PMMA and COP oxygen plasma treated surfaces in both (a) helicon and (b) RIE reactor. As can be seen, the ESR signal from the nanotextured surfaces does not show the presence of detectable free radicals. This result is in agreement with the results from the Bilek group, which has shown, that the ESR signal was negligible when the energy of ions was below 500eV (in our case ion energy is on the order of 100eV).
This negative result essentially proves that in our case free radicals cannot be responsible for covalent bonding. Bonding is probably due to specific chemical groups, as discussed above for PMMA and below for COP.

### Example 4: Nanotextured COP surfaces with stable chemical functionality capable of chemical binding of biomolecules

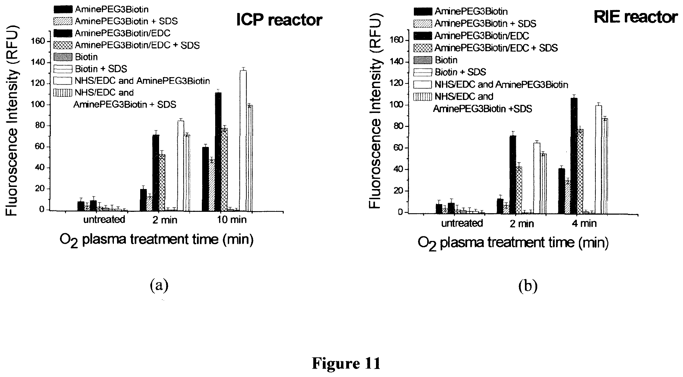

COP organic polymer samples were also processed in the plasma and aged with annealing at 130 °C for 30 min, as discussed in example 2. The same procedures as those described in example 3 above were followed for reaction with specific biotin derivatives. In Fig. 11 (a, b), the fluorescence intensities obtained from areas modified with the respective biotin derivatives are provided for plasma treated and rapidly aged (annealed) COP surfaces, before and after washing with the aggressive SDS protocol for both (a) helicon and (b) RIE reactor, tested immediately after plasma. Similarly, the plasma treated COP binds covalently due to C=O and -COOH. The untreated COP shows no covalent bonding. The treated and annealed shows stable covalent bonding.

### Example 5: Plasma etched SiO₂ surfaces with stable chemical functionality capable of chemical binding of biomolecules

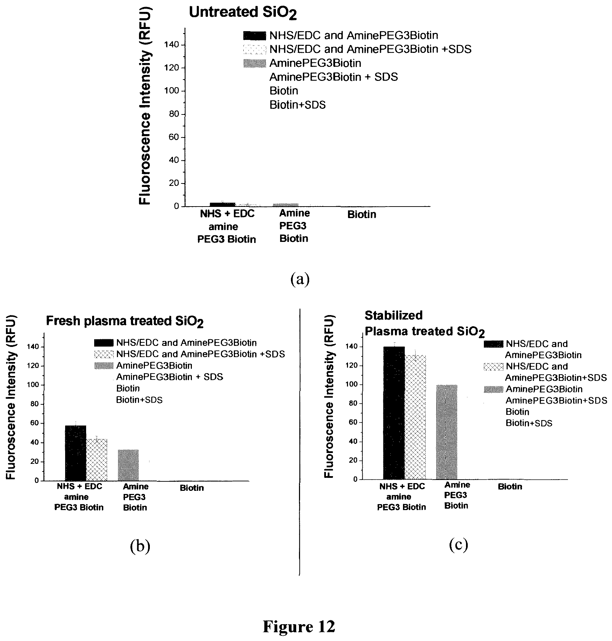

SiO₂ surfaces were also processed in fluorocarbon containing plasma, namely C₄F₈ plasma and stabilized with annealing at 106 °C for 60 min. The same procedures as those described in example 3 above were followed for reaction with specific biotin derivatives. In Fig. 12 (a, b), the fluorescence intensities obtained from areas modified with the respective biotin derivatives are provided for both untreated, 15-s C₄F₈ fresh plasma treated SiO₂ surfaces, and stabilized C₄F₈ plasma treated SiO₂ surfaces after reaction with AF546-labeled streptavidin.

As it is shown in Fig. 12 (a, b), untreated SiO₂ substrates exhibit no covalent bonding. On the other hand, SiO₂ plasma-modified surfaces provided high fluorescence values, indicating reaction of carboxylic groups with NHS/EDC and amine biotin or of carbonyl groups with amine-PEG₃-biotin. More specifically, the fluorescence values obtained by reacting the respective biotin derivative with surface carboxylic groups of stabilized SiO₂ plasma treated surface was 93-times higher than the value obtained by applying D-biotin onto a similar surface. On the contrary for an untreated surface a similar test shows that fluorescence values of the carboxylic groups were only 2-times higher than the value obtained by D-biotin. These results suggest that C₄F₈ plasma treatment of SiO₂ leads to the formation of reactive and available carboxylic and carbonyl groups that are stable after harsh washing with detergent at 90 °C and can be used for covalent immobilization of biomolecules.

### Example 6: High Density stable immobilization of Rabbit gamma-globulins (RgG) proteins on O₂ plasma treated PMMA surfaces

Here we demonstrate the stable immobilization capability of rabbit gamma-globulins (RgG) on plasma nanotextured and annealed at 110 °C for 30 min PMMA surfaces, after washing with sodium dodecyl sulphate (SDS), an ionic surfactant capable of overcoming the forces responsible for physical adsorption, while not affecting the covalent bonds, as discussed in ref by Bilek et al.

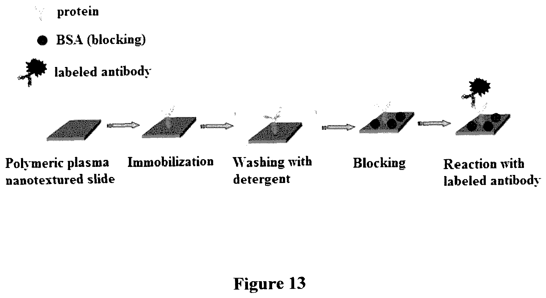

More specifically, the immobilization of proteins on organic polymer surfaces was performed by manual deposition of 1 µL droplets of protein (100 µg/mL) in buffer at pH 7.4 and incubation up to 24 h at room temperature in a humidity chamber. After three thorough washings with buffer, the samples were immersed in SDS detergent for 10 min at 90 °C (oven). After incubation in the detergent, the samples were washed in buffer for three times and immersed in a blocking solution for 1 h at room temperature in order to cover the remaining free protein-binding sites of the surface. Again, the surfaces were washed three times with buffer. The immobilized protein on the surface was detected through reaction with labeled antibody in blocking solution for 1 h at room temperature. Subsequently, the surfaces were washed extensively five times with buffer, and distilled water and dried under a stream of N₂. Fluorescence images were acquired with an Axioskop 2 Plus® epifluorescence microscope (Carl Zeiss, Germany) equipped with a Sony Cyber-Shot® 8-bit digital camera and processed with ImagePro Plus® software (Media Cybernetics, Inc.). The process of protein immobilization and detection is schematically depicted in Fig. 13.

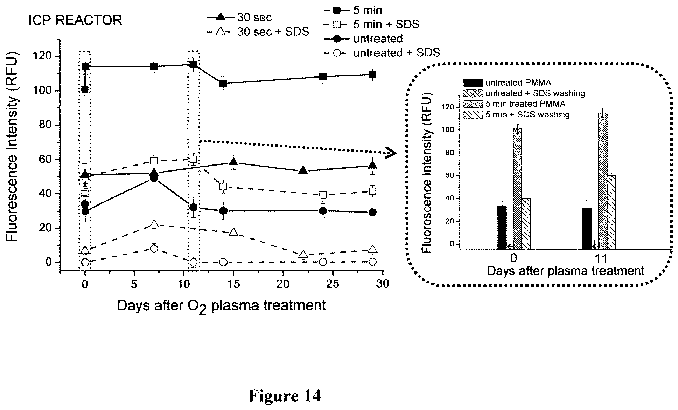

In Fig. 14, the fluorescence intensity obtained from areas coated with RgG (100 µg/mL) on (a) 30 s and 5 min plasma treated PMMA surfaces in a helicon plasma reactor is provided before and after washing with the aggressive SDS protocol, versus a long period of time after plasma treatment (approximately 30 days). A surface treated only for 30 is also included in the study; this surface has the chemical modification due to O₂ plasma exposure but almost negligible topography. A trend generally observed is the increase in fluorescence intensity with plasma treatment time up to about ×3 times after 5 min compared to untreated surfaces. Notice that, the 30 s treated sample that had almost negligible topography has also almost the same protein adsorption capacity with the untreated sample. The plasma treated PMMA surfaces typically show 40 - 85% protein retention compared to untreated PMMA surfaces where the SDS removed all of the adsorbed RgG protein.

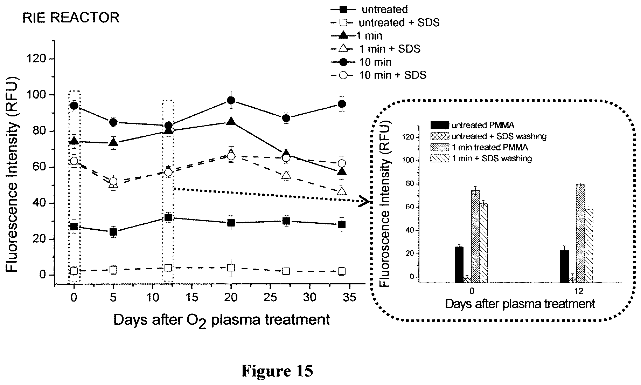

Also, in Fig. 15 (a, b), the fluorescence intensity obtained from areas coated with RgG (100 µg/mL) on (a) 1 min and 10 min plasma treated 0.5 mm thick PMMA surfaces in RIE is provided before and after washing with the aggressive SDS protocol, versus a long period of time after plasma treatment (approximately 30 days). Similarly, the plasma treated PMMA surfaces typically show 40 - 85% protein retention compared to untreated PMMA surfaces where the SDS removed all of the adsorbed RgG protein. Note, that after 1 min treatment in RIE reactor the PMMA nanotextured surface shows 85% protein retention compared to untreated PMMA surfaces. This specifies that a covalent bond is formed and is accountable for the robust protein attachment. The percentage of protein that is not retained can be attributed to physical adsorption.

### Example 7: High Density stable immobilization of Rabbit gamma-globulins (RgG) proteins on O₂ plasma treated COP

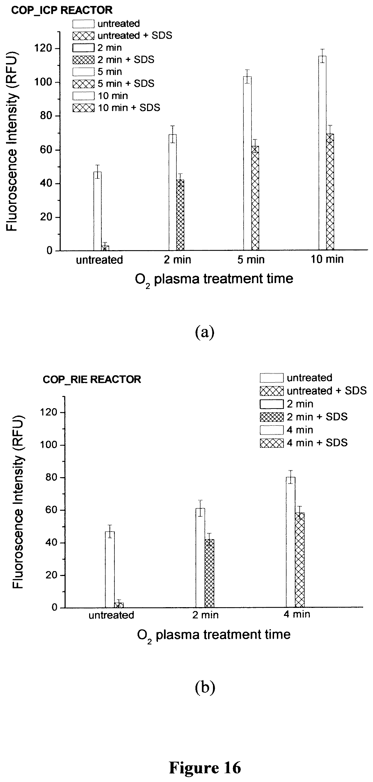

Example 7, is similar to example 6 but for a different polymer, namely COP. In Fig. 16 (a), the fluorescence intensities obtained from areas coated with RgG (100 µg/mL) are also provided for a treated surfaces immediately after plasma. COP surfaces in helicon reactor before and after washing with the aggressive SDS protocol and versus O₂ plasma treatment time (samples tested immediately after plasma). Again, the plasma treated COP surfaces, similarly to the PMMA ones, typically show 50 - 75% retention compared to untreated COP surfaces, while SDS removed approximately all of the adsorbed RgG protein on untreated COP surfaces.

In Fig. 16 (b), the fluorescence intensities obtained from areas coated with RgG (100 µg/mL) are also provided for plasma treated COP surfaces in RIE reactor before and after washing with the aggressive SDS protocol and versus O₂ plasma treatment time (samples tested immediately after plasma). Again, the plasma treated COP surfaces, similarly to the PMMA ones, typically show 50 - 75% retention compared to untreated COP surfaces, while SDS removed approximately all of the adsorbed RgG protein on untreated COP surfaces.

### Example 8: Direct immobilization of anti-C-Reactive protein (CRP) antibody on thermally annealed, O₂ plasma nanotextured PMMA surfaces and application to CRP immunoassay

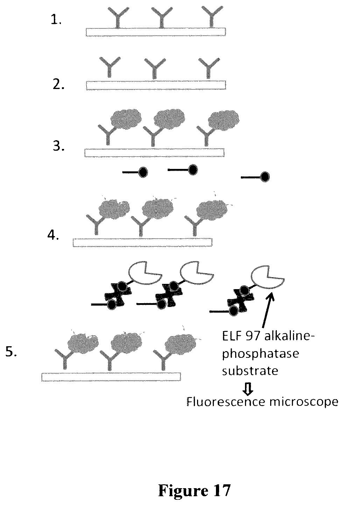

The PMMA surfaces were nanotextured and rapidly aged in Oxygen plasmas as described in example 1, and used as substrates for an immunoassay for the detection of C-Reactive protein (CRP). The immunoassay process is schematically shown in Fig. 17.

An anti-CRP antibody was immobilized onto the surface by incubation with a 100 µg/mL solution in 50 mM phosphate buffer, pH 7.4, overnight at room temperature (RT). The samples were then washed with 10 mM phosphate buffer at pH 7.4 and immersed in a 10 g/L BSA solution in 50 mM phosphate buffer at pH 7.4 (blocking solution) for 1 h at RT. Again, the surfaces were washed three times with 10 mM phosphate buffer. The immobilized antibody was reacted for 1 h with CRP solutions (0-100 ng/mL) in 10 mM PBS, pH 7.4, containing 10 mg/mL BSA, 0.05% (v/v) Tween 20, followed by 1 h incubation with biotinylated anti-CRP antibody solution (10 µg/mL) in the same buffer. Visualization of the immunocomplexes bound on the surface was carried out using ELF 97 Immunohistochemistry kit (Invitrogen Inc.) according to manufacturer's instructions. Fluorescence images were acquired with an Axioskop 2 Plus® epifluorescence microscope (Carl Zeiss, Germany) equipped with a Sony Cyber-Shot® 8-bit digital camera and processed with ImagePro Plus® software (Media Cybernetics, Inc.).

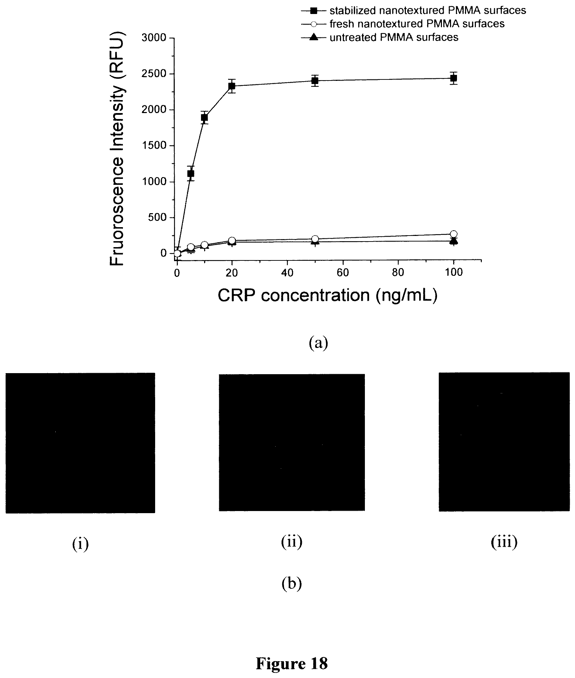

In Fig. 18a, calibration curves for CRP obtained using 5 min O₂ plasma-treated and untreated PMMA surfaces are presented. As it is shown, the nanotextured plasma treated surfaces provided considerably higher (15 times) fluorescence signals for the same CRP concentrations compared to the untreated ones, resulting to at least 50 times higher detection sensitivity for CRP. Representative fluorescence images of anti-CRP spots after reaction with a 50 µg/mL CRP solution created on (18bi) an untreated (18bii) rapidly aged via thermal annealing and (18biii) plasma-treated PMMA but not annealed surfaces using a microspotter and visualized through EFL 97 precipitate substrate, are also provided. As we can see from the plot and the spot images the rapidly aged (annealed) plasma treated samples exhibited increased adsorption, compared to the nanotextured not annealed, and the untreated samples.

### Example 9: Direct Immobilization of polyclonal anti-lipopolysaccharide (LPS) antibody on rapidly aged plasma patterned PMMA surfaces to prove antibody efficiency, and salmonella cell capture

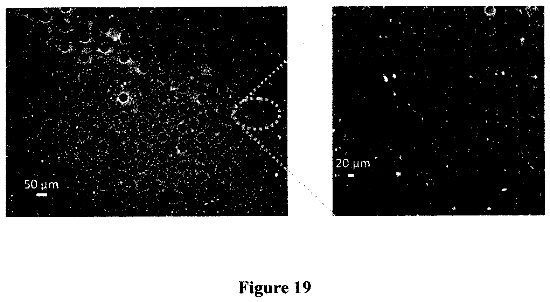

In this example we demonstrate significantly increased antibody (especially polyclonal anti-LPS antibody purified from Salmonella) immobilization on plasma treated PMMA areas compared to untreated ones. The nanotextured areas were formed by plasma etching on a PMMA substrate through patterning of an Ormocomp layer. For this purpose circles were patterned on a substrate using the LOR/Ormocomp stack, followed by etching of the pattern for 25 min (∼19 µm deep), and stripping of the photoresist. The process of anti-LPS sandwich assay is summarized below: (1) Coating with anti-LPS antibody by incubation for 24 h at RT with a 100 µg/mL, (2) washing and immersion for 2h in a 10g/l BSA solution, (3) 2 h reaction with LPS (Lipopolysaccharides from Salmonella enterica serotype typhimurium) solutions (0-500 ng/mL), (4) 2 h reaction with biotinylated anti-LPS antibody and (5) reaction using ELF 97 Immunohistochemistry kit (Invitrogen Inc.) according to manufacturer's instructions. Fig. 19 shows that the anti-LPS antibody attaches only on the nanotextured, plasma treated areas, and not to the untreated ones (circles).

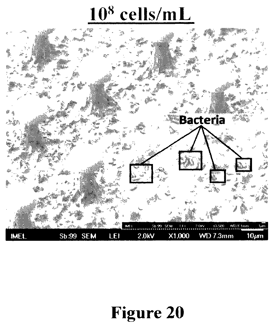

Having proven that the anti-LPS antibody attaches on the nanotextured surface, we used antibody modified nanotextured surfaces to capture salmonella cells. Representative tilted SEM images of captured Salmonella Typhimurium are shown in Fig. 20 proving that salmonella cells can be captured by the antibody immobilized onto such plasma nanotextured surfaces. The SEM image verifies that bacteria attach to chip bottom and walls.

## Claims

1. A process for the production of a plasma etched organic polymer surface or SiO₂ surface, with carbonyl or carboxyl groups, wherein the process comprises the step of etching the surface with oxygen or fluorine or fluorocarbon containing and polymer depositing plasmas or mixtures thereof, under anisotropic etching conditions, in the presence of an etching inhibitor, **characterized in that** after the plasma etching step the surface is subjected to a thermal annealing step by heating for 10 - 120 min at a temperature 5 to 40 degrees below the glass transition temperature of the organic polymer or the plasma deposited polymer.

2. A process according to claim 1, **characterized in that** the surface is heated at 10 °C below the glass transition temperature of the organic polymer or the plasma deposited polymer.

3. A process according to claim 1 or 2, wherein the organic polymer is selected from the group consisting of poly(methyl methacrylate), poly(ether ether ketone), poly(ethylene terephthalate), cyclo olefin polymer, cyclo olefin copolymer, polystyrene, crosslinked polydimethylsiloxane (PDMS), and PDMS-acrylate copolymers.

4. A process according to any one of claims 1 to 3, wherein the etching occurs through a mask exposing to the plasma only selected areas of the surface.

5. A process for the immobilization of a biomolecule on a plasma etched organic polymer surface or SiO₂ surface without the use of a linker comprising the following steps:
a) Producing a plasma etched surface according to the process of any one of claims 1-3.
b) Contacting a solution of the biomolecule with the plasma etched surface for 1-24 hours.

6. A process for the creation of a pattern of immobilized biomolecules on a plasma etched organic polymer surface or SiO₂ surface without the use of a linker comprising the following steps:
a) Producing a plasma etched surface according to the process of claims 4.
b) Contacting a solution of the biomolecule with the plasma etched surface for 1-24 hours.

7. A process according to claim 5 or 6, wherein the biomolecule binds to a specific cell type.

8. A diagnostic device comprising a plasma etched organic polymer or SiO₂ surface, **characterized in that** the surface is produced according to the process of any one of claims 1 to 7.

9. A diagnostic device according to claim 8, wherein the device contains a microarray or a microfluidic.

10. A medical device comprising a plasma etched organic polymer or SiO₂ surface, **characterized in that** the surface is produced according to the process of claim 1 to 7.

## Patentansprüche

1. Ein Verfahren zur Herstellung einer plasmageätzten organischen Polymeroberfläche oder SiO2-Oberfläche mit Carbonyl- oder Carboxylgruppen, wobei das Verfahren den Schritt des Ätzens der Oberfläche mit Sauerstoff oder Fluor oder Fluorkohlenstoff enthaltendem Fluor oder Fluorkohlenstoff und des Beschichten von Plasmen oder Gemischen davon, unter anisotropen Ätzbedingungen in Gegenwart eines Ätzinhibitors umfasst, **dadurch gekennzeichnet, dass** nach dem Plasmaätzschritt die Oberfläche einem thermischen Glühschritt unterzogen wird, indem sie 10 - 120 min lang auf eine Temperatur von 5 bis 40 Grad unter der Glasübergangstemperatur des organischen Polymers oder des plasmabeschichteten Polymers erhitzt wird.

2. Ein Verfahren nach Anspruch 1, **dadurch gekennzeichnet, dass** die Oberfläche bei 10 °C unterhalb der Glasübergangstemperatur des organischen Polymers oder des plasmabeschichteten Polymers erwärmt wird.

3. Ein Verfahren nach Anspruch 1 oder 2, worin das organische Polymer aus einer Gruppe ausgewählt wird, die aus Poly(methylmethacrylat), Poly(etheretherketon), Poly(ethylenterephthalat), Cyclolefinpolymer, Cyclo-Olefin-Copolymer, Polystyrol, vernetztem Polydimethylsiloxan (PDMS) und PDMS-Acrylat-Copolymeren besteht.

4. Ein Verfahren nach einem der Ansprüche 1 bis 3, worin das Ätzen durch eine Maske erfolgt, bei der nur ausgewählte Bereiche der Oberfläche dem Plasma ausgesetzt werden.

5. Ein Verfahren zur Immobilisierung eines Biomoleküls auf einer plasmageätzten organischen Polymeroberfläche oder SiO2-Oberfläche ohne die Verwendung eines Linkers, welches die folgenden Schritte umfasst:
a) Herstellen einer plasmageätzten Oberfläche nach dem Verfahren eines der Ansprüche 1-3.
b) Inkontaktbringen einer Lösung des Biomoleküls mit der plasmageätzten Oberfläche für 1-24 Stunden.

6. Ein Verfahren zur Erzeugung eines Musters von immobilisierten Biomolekülen auf einer plasmageätzten organischen Polymeroberfläche oder SiO2-Oberfläche ohne die Verwendung eines Linkers, welches die folgenden Schritte umfasst:
a) Herstellen einer plasmageätzten Oberfläche nach dem Verfahren des Anspruchs 4.
b) Inkontaktbringen einer Lösung des Biomoleküls mit der plasmageätzten Oberfläche für 1-24 Stunden.

7. Ein Verfahren nach Anspruch 5 oder 6, worin das Biomolekül an einen bestimmten Zelltyp gebunden ist.

8. Eine Diagnosevorrichtung, die ein plasmageätztes organisches Polymer oder eine SiO2-Oberfläche umfasst, **dadurch gekennzeichnet, dass** die Oberfläche nach dem Verfahren eines der Ansprüche 1 bis 7 hergestellt wird.

9. Eine Diagnosevorrichtung nach Anspruch 8, wobei die Vorrichtung ein Microarray oder eine Mikrofluidik enthält.

10. Eine medizinische Vorrichtung, die ein plasmageätztes organisches Polymer oder eine SiO2-Oberfläche umfasst, **dadurch gekennzeichnet, dass** die Oberfläche nach dem Verfahren nach Anspruch 1 bis 7 hergestellt wird.

## Revendications

1. Un processus de production d'une surface de polymère organique ou d'une surface SiO₂, gravée au plasma, avec des groupes de carbonyles ou de carboxyles, dans lequel le processus comprend l'étape de la gravure de la surface avec de l'oxygène ou du fluor ou du fluor carbone contenant plasmas et plasmas de dépôt de polymère ou mélanges, dans dès conditions de gravure anisotropique, en présence d'un inhibiteur de gravure, **caractérisée en ce qu'**après l'étape de gravure de plasma la surface est soumise à une étape thermique d'annealing en chauffant pendant 10 - 120 min à une température 5 à 40 degrés au-dessous de la température de transition de verre du polymère organique ou du polymère déposé de plasma.

2. Un processus selon la revendication 1, **caractérisé en ce que** la surface est chauffée à 10 °C en dessous de la température de transition du verre du polymère organique ou du polymère déposé par plasma.

3. Un processus selon la revendication 1 ou 2, dans lequel le polymère organique est sélectionné dans le groupe composé de poly (méthyl methacrylate), poly (éther éther cétone), poly(éthylène térephtalate), polymère olefin cyclo, cyclo olefin copolymère, polystyrène, polydimethylsiloxane (PDMS), et copolymères d'acrylate de PDMS.

4. Un processus selon l'une des revendications 1 à 3, dans lequel la gravure se produit à travers un masque exposant au plasma que des zones sélectionnées de la surface.

5. Un processus d'immobilisation d'une biomolécule sur une surface de polymère organique ou une surface SiO₂, gravée au plasma, sans l'utilisation d'un linker, comprenant les étapes suivantes:
a) Produire une surface gravée au plasma selon le processus de l'une ou l'autre des revendications 1-3.
b) Contacter une solution de la biomolécule avec la surface gravée au plasma pendant 1-24 heures.

6. Un processus de création d'un modèle de biomolécules immobilisées sur une surface de polymère organique ou une surface SiO₂, gravée au plasma, sans l'utilisation d'un linker, comprenant les étapes suivantes:
a) Produire une surface gravée au plasma selon le processus de revendication 4.
b) Contacter une solution de la biomolécule avec la surface gravée au plasma pendant 1-24 heures.

7. Un processus selon la revendication 5 ou 6, dans lequel la biomolécule se lie à un type de cellule spécifique.

8. Un dispositif de diagnostic comprenant une surface de polymère organique ou une surface SiO₂, gravée au plasma, **caractérisée en ce que** la surface est produite selon le processus de l'une des revendications 1 à 7.

9. Un dispositif de diagnostic selon la revendication 8, dans lequel le dispositif contient un microarray ou un microfluidique.

10. Un dispositif médical comprenant une surface de polymère organique ou une surface SiO₂, gravée au plasma, **caractérisée par le fait que** la surface est produite selon le processus de revendication 1 à 7.
